Europäisches Patentamt

European Patent Office

Office européen des brevets

(11) Veröffentlichungsnummer: **0 454 285 A1**

# EUROPÄISCHE PATENTANMELDUNG

(21) Anmeldenummer: 91250114.5

(22) Anmeldetag: 25.04.91

(51) Int. Cl.⁵: **C02F 3/00**, C02F 3/12, C02F 9/00, A01K 63/04

(30) Priorität: 26.04.90 DE 4013226

(43) Veröffentlichungstag der Anmeldung: 30.10.91 Patentblatt 91/44

(84) Benannte Vertragsstaaten: BE CH DK ES FR GR IT LI NL SE

(71) Anmelder: Dederichs, Knut
Niebuhr Schleuse
W-2059 Bröhten(DE)

(72) Erfinder: Dederichs, Knut
Niebuhr-Schleuse
W-2059 Broethen(DE)
Erfinder: Dederichs, Axel
Bäker Weg 1
W-2418 Ratzeburg(DE)

(74) Vertreter: UEXKÜLL & STOLBERG
Patentanwälte
Beselerstrasse 4
W-2000 Hamburg 52(DE)

(54) **Verfahren zur Reinhaltung von Wasser in Fischzuchtbecken sowie hierfür geeignete Fischbecken.**

(57) Die Erfindung betrifft ein Verfahren zur Reinhaltung von Wasser in Fischzuchtbecken unter Verwendung von Biobecken, bei dem man in dem Fischzuchtbecken (2) zwei verschiedene Wasserkreisläufe zur Entfernung von Schad- oder Fremdstoffen vorsieht, wobei bei dem ersten Wasserkreislauf durch eine vertikale Strömung das mit Schad- oder Fremdstoffen belastete Wasser aus dem Bodenbereich des Beckens in ein über dem Wasserspiegel (s) des Beckens befindlichen ersten Trommelfilter (20) ge-fördert und von diesem gereinigt, durch Schwerkraft wieder in das Becken zurückgeführt wird, und bei dem zweiten Wasserkreislauf durch eine horizontale Strömung das mit Schad- oder Fremdstoffen belastete Wasser im Oberflächenbereich des Beckens durch Überlauf abgeleitet und durch Schwerkraft über ein weiteres Trommelfilter (46) in das Biobecken (40) gefördert und nach biologischer Reinigung in das Fischzuchtbecken (2) zurückgeführt wird.

Die Erfindung betrifft ein verfahren zur Reinhaltung von Wasser in Fischzuchtbecken unter Verwendung von Biobecken sowie zur Durchführung des Verfahrens geeignete Fischzuchtbecken.

Bei modernen Fischzuchtanlagen erfolgt die Wasserzufuhr für die als Langstrombecken oder Rundbecken ausgebildeten Fischzuchtbehälter im Kreislaufverfahren, bei dem das Wasser über ein Überlauf aus dem Fischzuchtbehälter in einen Vorabscheider gelangt, in dem zuerst die groben Bestandteile des verunreinigten Wassers abgefiltert werden, worauf das Wasser über einen Kiesfilter mit mehreren Filterstufen geführt, so daß eine immer feinere Filtrierung ermöglicht wird. Um das mit Schadstoffen aus den Exkrementen der Tiere und Futterrückständen belastete Wasser aufzubereiten, werden Tropfkörperanlagen und/oder Belebungsanlagen und/oder Tauchkörperanlagen eingesetzt, in denen das durch die Zersetzungsprozesse mit Ammoniumsalzen bzw. Ammoniak belastete Wasser aerob mittels Mikroorganismen und unter Sauerstoffzufuhr in Nitrat umgewandelt wird.

Durch die Kiesfilter, biologischen Reinigungsstufen und erforderlichen Nachklärbecken sind derartige Anlagen verhältnismäßig aufwendig; der Einsatz von Tauchmotorpumpen,mit welchen das Wasser zum Tropfkörperturm und zu den Fischbecken zurückgepumpt wird, erzeugt ein die Lebensweise der Fische beeinträchtigenden Geräuschpegel, und vor allem wird durch einen derartigen Wasserkreislauf, an denen die Fischzuchtbehälter der Gesamtanlage angeschlossen sind, Krankheiten bzw. Krankheitskeime, die in einem Becken entstehen, sehr schnell auf die gesamte Anlage übertragen. Darüber hinaus müssen die Kiesfilter von Zeit zu Zeit rückgespült werden, was auch zu einer erheblichen Umweltbelastung führt.

Bei anderen Kreislaufanlagen werden Biotrommeln eingesetzt, die teilweise in das Wasser eintauchen und die gesamte Schmutzfracht biologisch aufarbeiten, jedoch ergeben sich bei diesen Verfahren Schwierigkeiten bei der Entfernung des Bioschlamms oder der sich absetzenden Biomasse. Auch bei getrennt vorgesehenen Biostufen müssen nachgeschaltete Sedimentationsbecken vorgesehen sein, um das gereinigte Wasser von der sich absetzenden Biomasse zu trennen. Auch bei dieser Arbeitsweise gelangen Krankheitsträger mit dem Klarablauf der Sedimentation nach Sauerstoffanreicherung und pH-Regulierung in den Kreislauf und können weitere Becken infizieren.

Der Erfindung liegt die Aufgabe zugrunde, ein neues Verfahren zur Reinhaltung von Wasser in derartigen Fischzuchtbecken unter Verwendung von Biobecken vorzuschlagen, bei dem auf wirtschaftliche und äußerst effektive Weise die Schmutzfracht der Becken unter geringerer Umweltbelastung effektiver entfernt werden kann und die Gefahr von Übertragung von Krankheiten von einem zum anderen Becken vermindert wird und gleichzeitig ein besserer Reinhaltungsgrad auf einfache Art und Weise ohne Einsatz von geräuschvollen Pumpen ermöglicht wird.

Zur Lösung dieser Aufgabe wird daher ein Verfahren gemäß Hauptanspruch vorgeschlagen, wobei besonders bevorzugte Ausführungsformen in den Unteransprüchen erwähnt sind. Letztlich wird auch ein zur Durchführung des Verfahrens geeignetes Fischzuchtbecken vorgeschlagen, wie es in Anspruch 5 definiert ist, wobei wiederum besonders bevorzugte Ausführungsformen in den weiteren Unteransprüchen erwähnt sind.

Überraschenderweise hat sich gezeigt, daß man mit dem erfindungsgemäßen Verfahren durch die Anordnung von zwei verschiedenen Wasserkreisläufen bzw. durch Erzeugung einer horizontalen und einer vertikalen Strömung eine sehr viel bessere und vollständigere Reinigung der Schmutzfracht bei gleichzeitiger Luft- bzw. Sauerstoffzufuhr erreicht und daß das bereits von dem Großteil der Feststoffe befreite Wasser in einem Biobecken nitrifiziert und teilweise denitrifiziert werden.

Hierbei erreicht man, daß eine mechanische Reinigung von Feststoffen unmittelbar am Fischbecken und nicht in außerhalb befindlichen Filtern erfolgt. Ferner ist es mit dem erfindungsgemäßen Verfahren bzw. mit der erfindungsgemäßen Vorrichtung möglich, daß jede mit Schmutzfracht belastete Zone mit der vertikalen Strömung in einem internen Kreislauf einer mechanischen Reinigung unterworfen werden kann, wobei sedimentierende und schwebende Feststoffe eliminiert werden und aufschwimmende Feststoffe bei dem zweiten Wasserkreislauf mit horizontaler Strömung ebenfalls mechanisch aufgefangen werden, wodurch die Aufenthaltszeiten der Feststoffe sehr kurz sind und der biologische Abbau aufgelöster Stoffe und noch in das Biobecken gelangende Feststoffe beispielsweise kleiner als $50\mu$ ist.

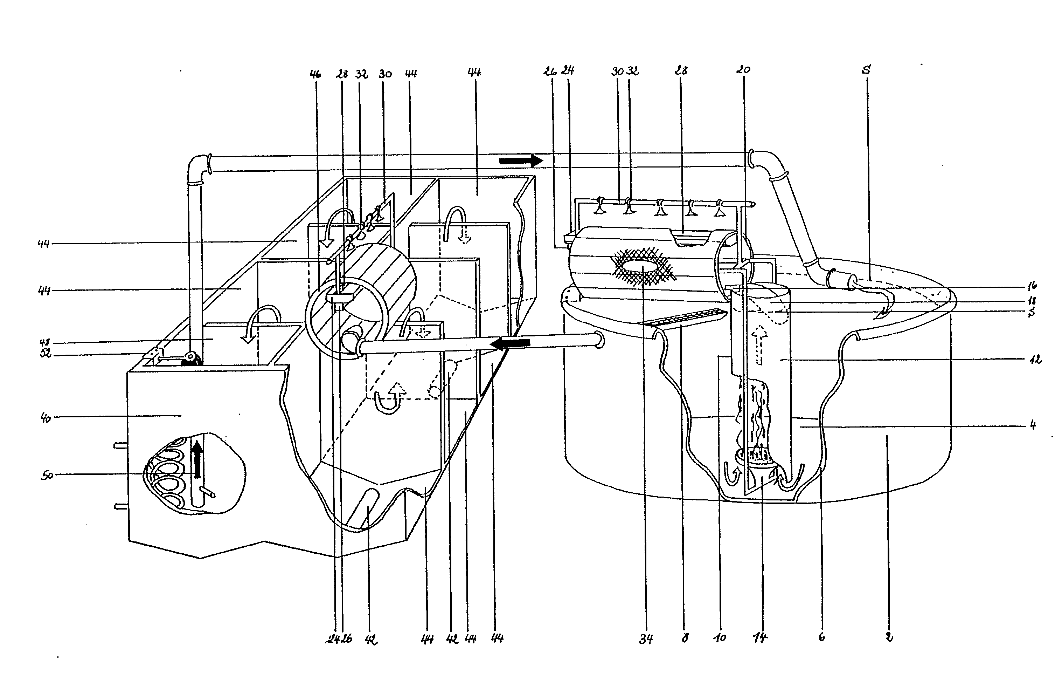

Im folgenden soll die Erfindung anhand der beiliegenden Zeichnung näher erläutert werden.

Das Fischzuchtbecken 2 besteht beispielsweise aus Polyester oder aus Stahl und kann mit einer Kunststoffinnenhülle versehen sein; es hat beispielsweise bei einem Durchmesser von etwa 2,6 m einen Fischbeckeninhalt von 4,5 m³. Der Boden 4 ist von der Seitenwand 6 zur Mitte hin gering geneigt.

Am Rande des Beckens befinden sich ein oder mehrere Überläufe oder eine Überlaufrinne 8, welche die aufschwimmenden Feststoffe im zweiten horizontal verlaufenden Wasserkreislauf bzw. Strömung aufnehmen.

In der Mitte des Fischzuchtbeckens 2 ist ein Druckluftheber 10 in Form eines beliebig gehaltenen Rohres 12 mit einem Durchmesser von etwa 30 bis 50 cm vorgesehen, welches im unteren Bereich einen Abstand von etwa 4 bis 8 cm von der Bodenfläche 4 hat. Im unteren Bereich des Drucklufthebers ist eine Belüftungsvorrichtung 14 vorgesehen, die Luft bzw. Sauerstoff einführt und somit eine nach oben gerichtete vertikale Strömung in dem Rohr 12 hervorruft. Im oberen Bereich des Drucklufthebers 10 ist eine Schwallrinne angeordnet, die in Zusammenhang mit einem gebogenen Leitblech 18 dafür sorgt, daß das durch den Luftstrom nach oben beförderte Wasser aus der Schwallrinne austritt. Die Schwallrinne 16 reicht in ein erstes Trommelfilter hinein, welches radial zum Becken und oberhalb des Wasserspiegels s angeordnet ist und vorzugsweise um einen Winkel α geneigt werden kann, um ein Durchspülen bei verschiedenen Volumenströmen im Steig- und Mischrohr 10 zu kompensieren. Die Filtertrommel 20 ist an ihrem Umfang gelagert und wird dort auf an sich bekannte Weise angetrieben. Die Filtertrommel ist mit einem Filtertuch aus Kunststoffäden oder Metallfäden mit einer Maschenweite von 100 bis 250μ bespannt und nimmt die mit dem im wesentlichen vertikal gerichteten Wasserströmung die Feststoffe auf. Vorzugsweise ist die Filtertrommel 20 mit einer Fluchtöffnung 34 in ihrem Umfang versehen, durch welche anfänglich hoch geförderte kleine Fische wieder zurück ins Fischbecken gelangen können. Die Öffnungsgröße richtet sich nach der jeweiligen Fischart bzw. Fischgröße und liegt im allgemeinen bei einer elliptisch geformten Öffnung in einem Bereich von 10 bis 30 cm Länge und 2 bis 6 cm Breite. Das Filtertuch ist derart an der Filtertrommel aufgespannt, daß auf der inneren Umfangsfläche keine Einbauten vorgesehen sind, die eventuell die Gesundheit der mitgeförderten Fische gefährden können.

Im oberen Bereich des Trommelfilters 20 ist eine koaxial angeordnete Ablaufrinne 24 vorgesehen, die sich über die gesamte Länge des Trommelfilters 20 erstreckt und deren Bodenfläche gering in Abflußrichtung über dem Behälterrand hinaus geneigt ist und in einem Abflußrohr 26 endet. Auf dieser Ablaufrinne ist vorzugsweise koaxial zu dieser ein Abstreifer 28 angeordnet, mit welchem die sich mit der Zeit ansammelnden Ablagerungen abgestreift werden und in die Ablaufrinne 24 fallen.

Oberhalb der Ablaufrinne und außerhalb des ersten Trommelfilters 20 ist eine Sprühvorrichtung 30 mit Sprühdüsen 32 vorgesehen, die vorzugsweise intermittierend betätigt wird, um das Filtertuch zu reinigen. Das Spülwasser aus den Sprühdüsen 32 reinigt nur den Bereich des Filtertuches oberhalb der Ablaufrinne 24, so daß die Verschmutzungen über das Abflußrohr 26 entfernt werden können.

Die mit dem zweiten Wasserkreislauf durch eine horizontale Strömung im Oberflächenbereich des Beckens durch den Überlauf 8 abgeleiteten Schad- oder Fremdstoffe gelangen in ein zweites Trommelfilter 46, welches oberhalb der ersten Biokammer 44 des Biobeckens 40 angeordnet ist. Dieses zweite Trommelfilter ist mit einem ähnlichen Filtertuch aus Kunststoffilamenten oder Metallfäden gebildet und hat eine Maschenweite von 40 bis 80μ. Dieses zweite Trommelfilter kann zur besseren Reinigung ebenfalls mit einem Abstreifer, einer Ablaufrinne und einer Sprühvorrichtung versehen sein, um die im Filter angesammelten Feststoffe zu entfernen.

Das Biobecken besteht aus mehreren Kammern 44 mit Festbettreaktoren, die mit entsprechenden Mikroorganismen zur Nitrifizierung belegt sind. Unterhalb der einzelnen Kammern oder Festbettreaktoren sind Belüftungskerzen 42 angeordnet, die den notwendigen Sauerstoff für den biologischen Abbau bereitstellen. Die Kammern oder Festbettreaktoren 44 sind so miteinander verbunden und konstruiert, daß sie nacheinander einmal von unten nach oben und zum anderen von oben nach unten durchströmt werden. Beispielsweise tritt das aus dem Überlauf 8 gelangende Wasser des zweiten Wasserkreislaufes nach mechanischer Entfernung von Feststoffen im zweiten Trommelfilter in die erste Biokammer und gelangt von dort nach Durchlauf von etwa sechs weiteren Kammern in eine Leerkammer 48, in welchem sich ein weiterer Druckluftheber 50 befindet, der das biologisch gereinigte Wasser wieder in das Fischzuchtbecken zurückführt.

Vorzugsweise haben die von unten nach oben durchströmten Biokammern eine Belüfterkerze 42 zur Sauerstoffanreicherung und Strömungsunterstützung; hier erfolgt aufgrund des hohen Sauerstoffangebotes die Nitrifikation. Die von oben nach unten durchströmten Biokammern haben keine Belüfterkerzen, so daß aufgrund des geringeren Sauerstoffgehaltes hier die Denitrifikation erfolgt.

Zweckmäßig ist in dieser Leerkammer noch eine Heizungseinheit und ein Zulauf für Frischwasserzusatz vorgesehen, wobei letzterer mittels eines Schwimmerschalters betätigt wird. Der Beckeninhalt des Biobeckens beträgt etwa 2,2 m³, hat eine Beckengrundfläche von etwa 2,5 x 1,25 m und die Festbettreaktoren haben eine spezifische Oberfläche von 200 m²/m³. Der erste Wasserkreislauf mit seiner vertikalen Strömung stellt also einen internen Wasserkreislauf dar, dessen Umwälzleistung etwa bei 150 bis 350 1/min liegt, während der zweite Wasserkreislauf mit einer horizontalen Strömung als externer Wasserkreislauf bei einer Umwälzleistung von etwa 10 bis 50 1/min liegt. Die Gebläseleistung (Luft) beträgt etwa bei 30 bis 60 m³/h bei einer Druckdifferenz von etwa 160 mbar.

Mit einem derartigen Biobecken wird der größ-

te Teil der BSB5-Belastung in der ersten Biokammer, der aus ingesamt sieben gleichgroßen Festbettkörpern bestehenden Anlage abgebaut. Die restlichen sechs Festbettkörper dienen zur Nitrifikation und Denitrifikation durch wechselnde Sauerstoffgehalte und werden kaskadenartig betrieben.

Mit der erfindungsgemäßen Anlage wird der biologische Abbau der gelösten Stoffe und Feststoffe auf kleiner als 50μ beschränkt. Der Anteil an verbliebenen Feststoffen liegt unter 0,1 ml/l, wodurch gesundheitliche Beeinträchtigungen der Fische, beispielsweise durch Kiemenentzündung durch Schwebstoffe, auf ein Minimum reduziert werden. Durch die Druckluftheber wird einmal die Sauerstoffzufuhr und zum anderen die Strömung der beiden Wasserkreisläufe bewirkt, wodurch Pumpen mit ihren die Fische beeinträchtigenden Geräuschen vermieden werden und allgemein durch diese Doppelwirkung zu einer besseren Wirtschaftlichkeit der Anlage führen.

**Bezugszeichenliste**

Fischzuchtbecken
2
Boden
4
Seitenwand
6
Überlauf
8
Druckluftheber
10
Steig- bzw. Mischrohr
12
Belüftungsvorrichtung
14
Schwallrinne
16
Leitblech
18
erstes Trommelfilter
20
Ablaufrinne
24
Abflußrohr
26
Abstreifer
28
Sprühvorrichtung
30
Sprühdüse
32
Fluchtöffnung
34
Biobecken
40
Belüfterkerzen
42
Biokammern
44
zweites Trommelfilter
46
Leerkammer
48
weiterer Druckluftheber
50
Schwimmerventil
52

**Patentansprüche**

1. Verfahren zur Reinhaltung von Wasser in Fischzuchtbecken unter Verwendung von Biobecken, **dadurch gekennzeichnet,** daß man in dem Fischzuchtbecken (2) zwei verschiedene Wasserkreisläufe zur Entfernung von Schad- oder Fremdstoffen vorsieht, wobei

   a) bei dem ersten Wasserkreislauf durch eine vertikale Strömung das mit Schad- oder Fremdstoffen belastete Wasser aus dem Bodenbereich des Beckens in ein über dem Wasserspiegel (s) des Beckens befindliches erstes Trommelfilter (20) gefördert und von diesem gereinigt, durch Schwerkraft wieder in das Becken zurückgeführt wird, und

   b) bei dem zweiten Wasserkreislauf durch eine horizontale Strömung das mit Schad- oder Fremdstoffen belastete Wasser im Oberflächenbereich des Beckens (2) durch Überlauf abgeleitet und durch Schwerkraft über ein weiteres Trommelfilter (46) in das Biobecken (40) gefördert und nach biologischer Reinigung in das Fischzuchtbecken (2) zurückgeführt wird.

2. Verfahren nach Anspruch 1, **dadurch gekennzeichnet,** daß das im zweiten Kreislauf im Oberflächenbereich des Fischzuchtbeckens (2) entnommene Wasser von einem oder mehr Fischzuchtbecken (2,) einem Biobecken (40) zugeführt und von dort nach biologischer Reinigung in Teilströmen in die jeweiligen Fischzuchtbecken (2,) zurückgeführt wird.

3. Verfahren nach Anspruch 1 und 2, **dadurch gekennzeichnet,** daß das mit Schad- oder Fremdstoffen belastete Wasser aus dem ersten Wasserkreislauf durch das erste Trommelfilter (20) mit einer Maschenweite von 100 bis 300 μm und das aus dem zweiten Wasserkreislauf abgezogene Wasser durch ein zweites Trommelfilter (46) mit einer Maschenweite von 30 bis 100 μm in das Biobecken (40) gefördert wird.

4. Verfahren nach Anspruch 1 bis 3, **dadurch gekennzeichnet,** daß das Durchsatzverhältnis des ersten Wasserkreislaufes zu dem des zweiten Wasserkreislaufes etwa 150 bis 350 : 10 bis 50 1/min beträgt.

5. Verfahren nach Anspruch 1 bis 4, **dadurch gekennzeichnet,** daß man sowohl beim ersten Wasserkreislauf das Wasser aus dem Bodenbereich als auch bei dem zweiten Wasserkreislauf das Wasser vom Biobehälter (40) pneumatisch mit Druckluft fördert.

6. Fischzuchtbecken, insbesondere zur Durchführung des Verfahrens gemäß Anspruch 1 bis 5, **gekennzeichnet** durch
   a) einen in dem Becken (2) befindlichen Druckluftheber (10) bestehend aus einem kurz oberhalb des Beckenbodens (4) endenden Steig- bzw. Mischrohr (12) mit im unteren Rohrbereich angeordneten Belüftungsvorrichtungen (14) und einer am oberen Rohrbereich angeordneter Schwallrinne (16),
   b) ein oder mehrere oberhalb des Wasserspiegels (s) angeordnete und motorisch angetriebene Trommelfilter (20), in dessen Eintrittsende die Schwallrinne (16) des Drucklufthebers (10) mit geringem Abstand zur unteren Trommelwand hineinreicht,
   c) eine im oberen Bereich innerhalb des oder der Trommelfilter (20) jeweils etwa koaxial angeordneten Ablaufrinne (24), die sich über die gesamte Länge des Trommelfilters (20) erstreckt und deren Bodenfläche gering in Abflußrichtung über den Behälterrand hinaus geneigt ist und in einem Abflußrohr (26) endet, sowie
   d) eine etwa senkrecht oberhalb der Ablaufrinne (24) und außerhalb des Trommelfilters (20) angeordnete Sprühvorrichtung (30) mit auf die Siebtrommel gerichteten Sprühdüsen (32).

7. Fischzuchtbecken nach Anspruch 6, **dadurch gekennzeichnet,** daß am Beckenrand eine Ablaufrinne (8) vorgesehen ist, die mit dem Biobecken (40) in Verbindung steht.

8. Fischzuchtbecken nach Anspruch 6, **dadurch gekennzeichnet,** daß an der Innenseite des ersten Trommelfilters (20) im oberen Bereich ein koaxial zu diesem angeordneter Abstreifer (28) angeordnet ist.

9. Fischzuchtbecken nach Anspruch 8, **dadurch gekennzeichnet,** daß der Abstreifer (28) an der koaxialen Ablaufrinne (24) befestigt ist.

10. Fischzuchtbecken nach Anspruch 6 bis 9, **dadurch gekennzeichnet,** daß das erste Trommelfilter (20) ablaufend um einen Winkel α von bis zu 10˚ aus der Ebene des Wasserspiegels(s) in Richtung auf das Steig- bzw. Mischrohr (12) schwenkbar ist.

11. Fischzuchtbecken nach Anspruch 6 bis 10, **dadurch gekennzeichnet,** daß die Rückführung des gereinigten Wassers aus dem Biobecken (40) über ein druckluftgetriebenes Steigrohr erfolgt.

12. Fischzuchtbecken nach Anspruch 6 bis 11, **dadurch gekennzeichnet,** daß das erste Trommelfilter (20) eine etwa 10 bis 30 cm lange und 2 bis 6 cm breite Fluchtöffnung (34) aufweist.

13. Fischzuchtbecken nach Anspruch 6 bis 12, **dadurch gekennzeichnet,** daß die von unten nach oben durchströmten Biokammern eine Belüfterkerze zur Sauerstoffanreicherung und Strömungsunterstützung enthalten.

14. Fischzuchtbecken nach Anspruch 6 bis 13, **dadurch gekennzeichnet,** daß die von oben nach unten durchströmten Biokammern keine Belüfterkerzen enthalten.

| | EINSCHLÄGIGE DOKUMENTE | | EP 91250114.5 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| A | US - A - 3 888 210 (BUSS) <br> * Zusammenfassung; Fig. 1,2 * <br> -- | 1 | C 02 F 3/00 <br> C 02 F 3/12 <br> C 02 F 9/00 <br> A 01 K 63/04 |
| A | DE - A1 - 3 628 909 (SIENKNECHT) <br> * Zusammenfassung; Fig. 1,2 * <br> -- | 1,2 | |
| A | CH - A5 - 654 171 (CYRIL PIGUET) <br> * Zusammenfassung * <br> ---- | 1 | |
| | | | **RECHERCHIERTE SACHGEBIETE (Int Cl⁵)** |
| | | | C 02 F <br> A 01 K 63/00 |
| | Der vorliegende Recherchenbericht wurde für alle Patentansprüche erstellt. | | |

| Recherchenort | Abschlußdatum der Recherche | Prüfer |
|---|---|---|
| WIEN | 05-07-1991 | WILFLINGER |